# FASCICULE DE BREVET EUROPEEN

(11) **EP 1 260 462 B1**
(45) Date de publication et mention de la délivrance du brevet: **24.11.2004**
(21) Numéro de dépôt: 02291206.7
(22) Date de dépôt: 15.05.2002
(51) Int. Cl.: B65G 39/12, B65G 21/06

(54) **Chassîs de support pour convoyeur à bande et convoyuer à bande le comportant**
Tragrahmen für einer Bandförderer und Bandförderer mit einem solchen Rahmen
Supporting frame for belt conveyor and belt conveyor comprising same

(30) Priorité: 17.05.2001 FR 0106535
(43) Date de publication de la demande: 27.11.2002
(73) Titulaire: Brunone, René, 27950 Saint-Marcel (FR)
(72) Inventeur: Brunone, René, 27950 Saint-Marcel (FR)
(74) Mandataire: Blot, Philippe Robert Emile

(56) Documents cités:
- DE-A- 4 113 314
- GB-A- 707 892
- US-A- 3 459 291
- US-A- 3 815 724
- US-A- 5 044 490

## Description

La présente invention concerne un châssis de support pour un convoyeur à bande et un convoyeur à bande comportant un tel châssis.

Les convoyeurs à bande sont couramment utilisés sur les chantiers afin d'assurer le transport de matériaux d'excavation ou de remblais, évitant ainsi le transport de ces matériaux dans des véhicules tels que des camions. Ces convoyeurs à bande comportent une succession de châssis de support disposés à la suite les uns des autres, la bande mobile étant supportée par les châssis de support sur son trajet en boucle.

Ces châssis de support comportent couramment un bâti sur lequel reposent un ou plusieurs berceaux de guidage de la bande.

Sur les chantiers, notamment de très grande étendue, comme les chantiers routiers ou autoroutiers, il est nécessaire de disposer de convoyeurs déplaçables pouvant être installés et démontés facilement au fur et à mesure du déroulement du chantier.

Les châssis de support connus actuellement sont formés d'un ensemble de profilés métalliques reliés les uns aux autres par boulonnage. Ainsi, la mise en oeuvre d'un convoyeur nécessite le montage sur le chantier de l'ensemble des châssis, puis leur démontage complet en vue d'un éventuel remontage du convoyeur en un autre endroit du chantier.

La structure du convoyeur rend ce montage et ce démontage très longs et malaisés.

Un châssis de support selon le préambule de la revendication 1 est décrit dans le document US-A-3.459.291.

L'invention a pour but de proposer un châssis de support pour un convoyeur à bande et un convoyeur à bande dont le montage et le démontage sur un chantier peuvent être réalisés très facilement, afin de permettre son déplacement rapide, les châssis pouvant être transportés facilement.

A cet effet, l'invention a pour objet un châssis de support pour un convoyeur à bande selon la revendication 1.

Suivant des modes particuliers de réalisation, le châssis de support comporte l'une ou plusieurs des caractéristiques des revendications dépendentes.

L'invention a également pour objet un convoyeur à bande comportant un ensemble de châssis de support répartis suivant la longueur du convoyeur et une bande mobile supportée par les châssis de support, caractérisé en ce que l'ensemble de châssis de support comporte des châssis tels que définis ci-dessus.

L'invention sera mieux comprise à la lecture de la description qui va suivre, donnée uniquement à titre d'exemple et faite en se référant aux dessins, sur lesquels :
- la figure 1 est une vue en bout d'un châssis de support d'un convoyeur à bande selon l'invention ;
- la figure 2 est une vue de dessus du châssis de support de la figure 1 ;
- la figure 3 est une vue de côté du châssis de support des figures 1 et 2 ;
- la figure 4 est une vue de dessus du détail des profils d'emboîtement des deux éléments de structure du châssis de support des figures 1 à 3 ;
- la figure 5 est une vue de côté suivant le sens de la flèche F5 des moyens démontables de liaison des berceaux de support de la bande au bâti du châssis de support de la figure 1 ; et
- la figure 6 est une vue en bout d'une variante de réalisation d'un châssis de support selon l'invention.

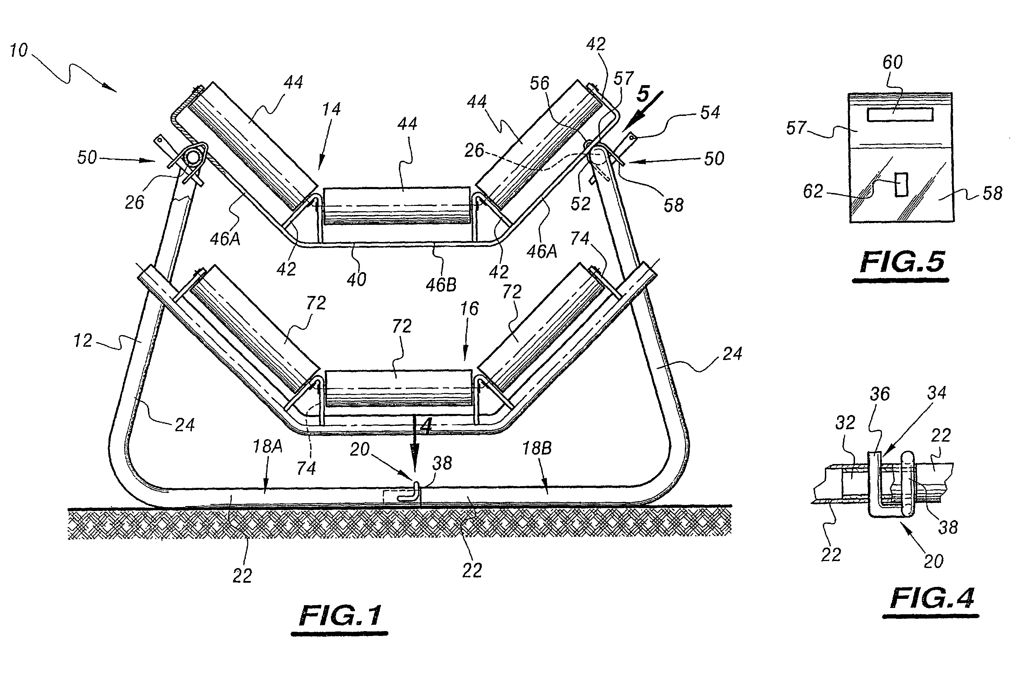

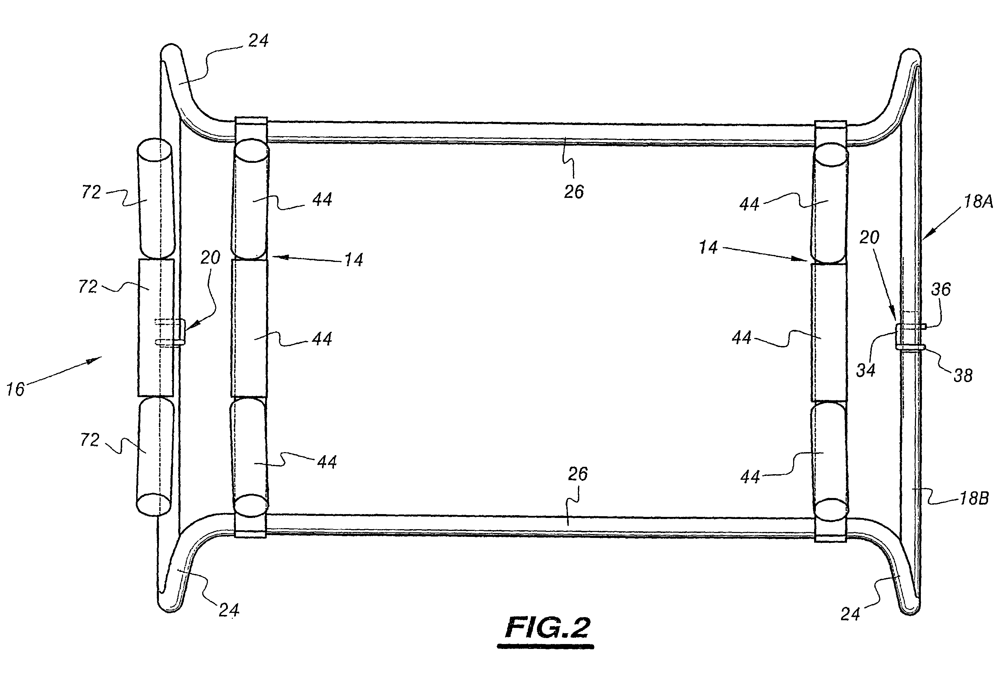

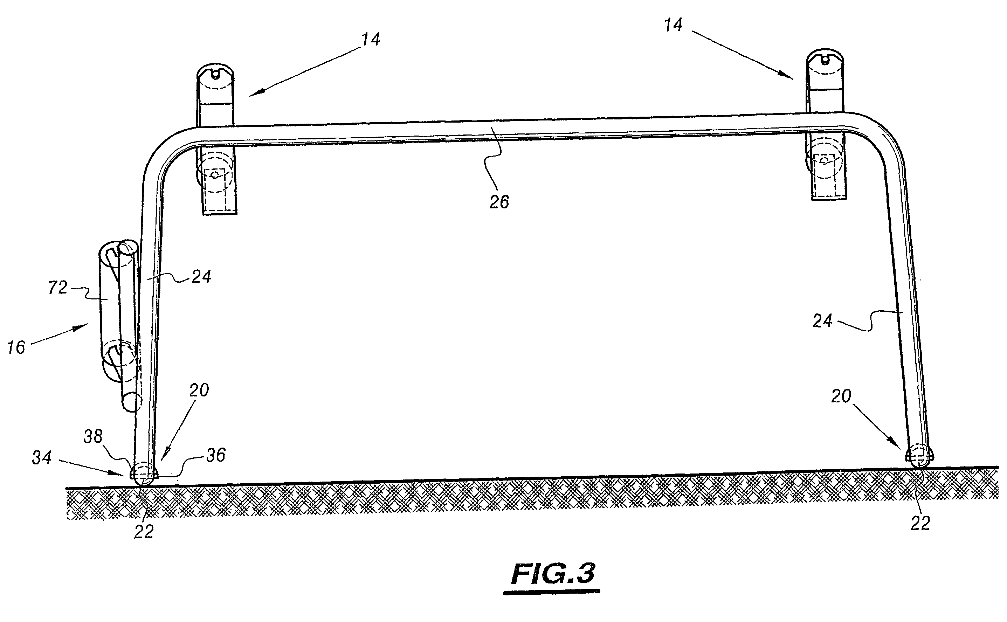

Sur les figures 1 à 3 est représenté un premier mode de réalisation d'un châssis de support 10 selon l'invention. Ce châssis de support est destiné à être mis en oeuvre dans un convoyeur à bande comportant un ensemble de tels châssis de support disposés les uns à la suite des autres suivant la longueur du convoyeur.

Le convoyeur à bande comporte, comme connu en soi, une bande de transport repliée pour former une bande. Il comporte en outre des moyens d'entraînement de la bande pour sa mise en mouvement sur elle-même.

Chaque châssis de support a une longueur mesurée suivant le sens de circulation de la bande comprise entre 1 et 2 m et de préférence sensiblement égale à 1,5 m.

Suivant la longueur du convoyeur à bande, les châssis de support sont répartis régulièrement, ceux-ci étant par exemple espacés de 5 à 10 m.

Chaque châssis de support comporte un bâti 12 adapté pour reposer sur le sol, deux berceaux 14 de guidage du brin supérieur de la bande et un berceau 16 de guidage du brin inférieur de la bande.

Selon l'invention, le bâti 12 comporte deux éléments de structure assemblés 18A, 18B généralement identiques et des moyens démontables 20 d'assemblage des éléments de structure 18A, 18B. Ces deux éléments de structure sont chacun constitués d'une seule pièce filiforme et sont, dans l'exemple représenté, formés d'un tube cintré.

Chaque élément de structure 18A, 18B comporte deux tronçons d'extrémité 22 formant des tronçons d'appui sur le sol. Ces deux tronçons sont prolongés par des jambes 24 sensiblement verticales. Les deux jambes 24 sont reliées l'une à l'autre par une poutre longitudinale sensiblement horizontale 26 supportant les berceaux de guidage supérieurs 14.

Les tronçons d'appui 22 de chaque élément de structure s'étendent parallèlement l'un à l'autre. Ils sont symétriques l'un de l'autre par rapport à un plan médian s'étendant transversalement au sens d'avancement de la bande.

Les tronçons d'appui 22 et les jambes 24 associées délimitent entre eux un angle légèrement inférieur à 90°, cet angle étant par exemple égal à environ 80°.

L'angle formé entre les jambes 24 et la poutre longitudinale 26 est légèrement supérieure à 90° et est par exemple égal à 95°.

Les coudes reliant les tronçons 22, 24, d'une part, et 24, 26, d'autre part, sont adaptés pour que, lorsque les tronçons d'appui 22 d'un même élément de structure s'appuient sur une surface sensiblement plane, la poutre 26 s'étend parallèlement à cette surface.

Par ailleurs, la longueur de la poutre 26 est inférieure à la distance séparant les tronçons d'appui 22, de sorte que les jambes 24 sont généralement convergentes l'une vers l'autre depuis leur extrémité inférieure reliée aux tronçons d'appui 24 jusqu'à leur extrémité supérieure reliée à la poutre 26.

Les éléments de structure 18A et 18B sont reliés l'un à l'autre depuis les extrémités libres des tronçons d'appui 22. Ils sont également reliés l'un à l'autre par les berceaux de guidage 14 et 16.

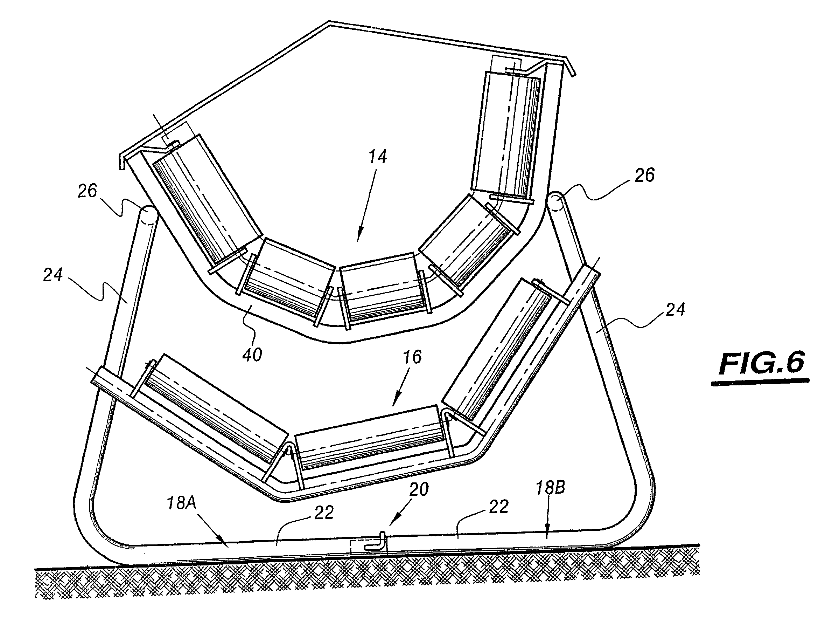

La liaison des éléments de structure 18A, 18B est assurée en dehors des berceaux de guidage 14 et 16 par des moyens démontables d'assemblage 20. Ceux-ci sont constitués, comme illustré sur la figure 4, par des profils d'emboîtement complémentaires assurant l'engagement l'une dans l'autre des extrémités libres des tronçons d'appui 22.

Plus précisément, l'une des extrémités d'un tronçon d'appui 22 présente un tronçon d'extrémité 32 de diamètre réduit adapté pour s'engager à l'intérieur du tronçon d'appui 22 complémentaire de l'autre élément de structure, lequel est de diamètre constant sur toute sa longueur.

Chaque élément de structure 18A, 18B comporte une extrémité d'un tronçon d'appui 22 ayant un tronçon de diamètre réduit et une autre extrémité ayant un tronçon de diamètre constant. Ainsi, les deux éléments de structure 18A, 18B sont identiques et permettent un emboîtement réciproque inversé l'un dans l'autre depuis chaque extrémité.

En outre, afin d'assurer un assemblage fiable des deux éléments de structure, les moyens démontables 20 d'assemblage comportent une clé de verrouillage 34 engagée transversalement au travers des extrémités emboîtées des éléments de structure 18A et 18B. La clé de verrouillage 34 comporte, par exemple, une tige 36 reçue au travers d'orifices alignés ménagés au travers des tronçons emboîtés des éléments de structure 18A, 18B.

Afin d'assurer l'immobilisation de la clé de verrouillage 34, la tige 36 est prolongée par une crosse 38 décalée axialement par rapport à l'axe de la tige. La crosse 38 est adaptée pour être engagée partiellement autour d'un élément de structure 18A, 18B.

Les berceaux supérieurs 14 de guidage de la bande sont au nombre de deux pour chaque châssis de support. Ils s'étendent transversalement au sens de circulation de la bande et sont disposés au voisinage des extrémités du bâti 12. Chaque berceau de guidage repose seulement sur les deux poutres longitudinales 26.

Plus précisément, les berceaux supérieurs de guidage 14 comportent chacun un châssis 40 constitué d'une cornière s'étendant transversalement par rapport au sens de déplacement de la bande d'une poutre longitudinale 26 à l'autre.

Le châssis 40 comporte, sur sa surface supérieure, des pattes 42 portant des rouleaux rotatifs 44. Dans le mode de réalisation illustré aux figures 1 à 3, trois rouleaux 44 sont disposés de manière coplanaire suivant la longueur du châssis 40. Les rouleaux 44 définissent une surface d'appui en creux pour la bande du convoyeur.

Le châssis 40 présente une surface d'appui sur les poutres longitudinales 26 qui est généralement convexe. Cette surface d'appui comporte, dans le mode de réalisation représenté, deux tronçons d'extrémité 46A délimitant entre eux un angle inférieur à 180° et, par exemple, égal à 120°. Ces deux tronçons d'extrémité 46A sont reliés par un tronçon de liaison 46B. Ainsi, le châssis 40 présente extérieurement une forme d'auge, les deux flancs formés des tronçons d'extrémité 46A convergeant l'un vers l'autre dans la partie médiane du châssis.

Le châssis 40 de chaque berceau est relié aux poutres 26 par des moyens 50 de liaison démontables. Ces moyens de liaison comportent chacun une agrafe 52 en forme de fourche et une clavette 54 assurant la retenue des agrafes autour des poutres longitudinales 26.

Plus précisément, et comme illustré sur la figure 1, chaque agrafe 52 est constituée d'une plaque déformée pour former une fourche. Le fond noté 56 de l'agrafe est formé de deux pans inclinés successifs 57 délimitant entre eux un angle aigu. Ces pans inclinés 57 sont prolongés par des bras 58 parallèles entre lesquels est définie l'extrémité ouverte de l'agrafe.

Comme illustré sur la figure 5, le fond 56 de l'agrafe présente une lumière 60 ménagée au travers de chaque pan incliné 57. A l'intérieur des lumières 60 de chaque agrafe est engagé un tronçon d'extrémité 46A du châssis. L'agrafe 52 est ainsi déplaçable à coulissement suivant la longueur du tronçon d'extrémité 46A.

Comme illustré sur la figure 1, les agrafes 52 sont chacune emprisonnée sur un tronçon d'extrémité 46A du châssis par les pattes 42 assurant la retenue des rouleaux 44.

En outre, deux lumières 62 sont ménagées au travers des bras 58 de l'agrafe pour la réception de la clavette 54.

Afin d'assurer la solidarisation des berceaux supérieurs 14 et du bâti 12, les poutres longitudinales 26 sont reçues dans la fourche délimitée entre les bras 58 de chaque agrafe. La clavette 54 engagée en force assure un blocage de la poutre 26 à l'intérieur de l'agrafe, assurant simultanément un serrage du tronçon d'extrémité 46A contre la poutre 26.

On comprend ainsi que, sous l'action des clavettes 54, les berceaux supérieurs 14 sont immobilisés par rapport au bâti 12.

Chaque châssis de support comporte seulement un berceau de guidage 16 du brin inférieur de la bande du convoyeur. Ce berceau inférieur 16 est constitué d'un châssis de support tubulaire 70 portant quatre rouleaux 72 supportés par des pattes 74. Les extrémités du châssis de support 70 sont solidarisées aux jambes 24 des éléments de structure 18A, 18B, sensiblement dans la partie médiane de ces jambes.

La solidarisation est assurée par des moyens identiques aux moyens de liaison démontables 50.

On conçoit qu'un convoyeur à bande comportant des châssis tous identiques et tels qu'illustrés sur les figures 1 à 3 est d'une mise en place, d'un démontage et d'un transport aisés.

En effet, les éléments de structure 18A, 18B de chacun des bâtis 12 peuvent être désassemblés et transportés facilement en étant disposés l'un contre l'autre, les poutres longitudinales 26 étant en contact les unes des autres alors que les jambes 24 et les tronçons d'appui 22 sont également en contact l'un avec l'autre.

Ainsi, le transport des bâtis 12 démontés s'effectue dans un encombrement minimal.

Une fois sur le lieu d'installation du convoyeur, les bâtis 12 peuvent être montés de manière très simple par emboîtement l'une dans l'autre des extrémités des éléments de structure 18A, 18B et par mise en place des clés de verrouillage 34.

De plus, la liaison des berceaux de guidage 14 et 16 au bâti 12 s'effectue sans difficulté par engagement des poutres longitudinales 26 ou des jambes 24 dans les agrafes 52. L'immobilisation des liaisons s'effectue simplement par mise en place des clavettes 54.

On comprend par ailleurs que du fait du coulissement des agrafes 52 suivant la longueur des tronçons d'extrémité 46A du châssis des berceaux de guidage, ces tronçons d'extrémité étant généralement inclinés l'un par rapport à l'autre, les berceaux de guidage supérieurs 14, et éventuellement inférieurs 16, peuvent être basculés, afin d'assurer un maintien incliné de la bande.

L'inclinaison des berceaux de guidage favorise le guidage de la bande dans des régions courbes du convoyeur.

Sur la figure 6 est représentée une variante de réalisation. Dans cette variante de réalisation, les éléments identiques ou analogues à ceux du mode de réalisation des figures 1 à 3 sont désignés par les mêmes numéros de référence.

Dans cette variante, le berceau supérieur 14 comporte cinq rouleaux 44 portés par un châssis 40. Le châssis 40 est représenté dans une position basculée en appui sur les deux poutres longitudinales 26.

De même, le berceau de support inférieur 16 est également basculé, la liaison des extrémités du châssis 70 du berceau étant effectuée à des hauteurs différentes suivant la longueur des jambes 24.

## Revendications

1. Châssis de support (10) pour un convoyeur à bande comportant un bâti (12), et au moins un berceau (14, 16) de guidage de la bande reposant sur ledit bâti (12), le bâti (12) comportant au moins deux éléments de structure assemblés (18A, 18B) sensiblement identiques, chaque élément de structure (18A, 18B) étant formé d'une seule pièce et notamment d'un tube cintré et étant généralement curviligne, et des moyens démontables (20) d'assemblage desdits éléments de structure (18A, 18B), **caractérisé en ce que** chaque élément de structure (18A, 18B) comporte des extrémités libres entre lesquelles sont formés deux tronçons (22) d'appui sur le sol prolongés par des jambes (24) reliées l'une à l'autre par une poutre longitudinale (26) de support du ou de chaque berceau (14), et **en ce que** lesdits moyens démontables (20) d'assemblage sont disposés aux extrémités libres des éléments de structure (18A, 18B) et comportent des profils d'emboîtement complémentaires (22, 32) ménagés sur lesdits éléments de structure (18A, 18B).

2. Châssis de support selon la revendication 1, **caractérisé en ce que** lesdits moyens démontables (20) d'assemblage comportent en outre une clé (34) de verrouillage des profils d'emboîtement complémentaires (22, 32).

3. Châssis de support selon l'une quelconque des revendications précédentes, **caractérisé en ce qu'**il comporte des moyens démontables (50) de liaison du ou de chaque berceau de guidage (14, 16) sur le ou chaque élément de structure (18A, 18B).

4. Châssis de support selon la revendication 3, **caractérisé en ce que** le ou chaque berceau (14, 16) présente une surface d'appui sur lesdites poutres généralement convexe, et **en ce que** lesdits moyens démontables (50) de liaison sont adaptés pour une liaison du ou de chaque berceau (14, 16) dans au moins deux positions distinctes de basculement par rapport au bâti (12).

5. Convoyeur à bande comportant un ensemble de châssis de support (10) répartis suivant la longueur du convoyeur et une bande mobile supportée par les châssis de support (10), **caractérisé en ce que** ledit ensemble de châssis de support comporte des châssis (10) selon l'une quelconque des revendications précédentes.

## Patentansprüche

1. Tragrahmen (10) für einen Bandförderer mit einem Gestell (12) und wenigstens einem Bandführungsmuldenbett (14, 16), das auf dem Gestell (12) gelagert ist, wobei das Gestell (12) wenigstens zwei montierte Strukturelemente (18A, 18B), die im Wesentlichen identisch sind, wobei jedes Strukturelement (18A, 18B) aus einem einzigen Stück gebildet und insbesondere ein bogenförmiges Rohr ist und allgemein krummlinig ist, und demontierbare Mittel (20) zum Montieren der Strukturelemente (18A, 18B) aufweist, **gekennzeichnet dadurch, dass** jedes Strukturelement (18A, 18B) freie Enden aufweist, zwischen welchen zwei Abschnitte (22) zum Aufstellen auf dem Boden gebildet sind, welche von Armen (24) verlängert sind, die mittels eines Längsträgers (26) miteinander zum Tragen des oder jedes Muldenbetts (14) verbunden sind, und dass die abnehmbaren Montagemittel (20) an den freien Enden der Strukturelemente (18A, 18B) angeordnet sind und komplemäntere, ineinandergreifende Profile (22, 32) aufweisen, die an den Strukturelementen (18A, 18B) angeordnet sind.

2. Tragrahmen nach Anspruch 1, **gekennzeichnet dadurch, dass** die demontierbaren Montagemittel (20) außerdem ein Bolzenteil (34) zum Verriegeln der komplementären, ineinandergreifenden Profile (22, 32) aufweisen.

3. Tragrahmen nach einem der vorherigen Ansprüche, **gekennzeichnet dadurch, dass** er demontierbare Mittel (50) zum Verbinden des oder jedes Führungsmuldenbetts (14, 16) auf dem oder jedem Strukturelement (18A, 18B) aufweist.

4. Tragrahmen nach Anspruch 3, **gekennzeichnet dadurch, dass** das oder jedes Muldenbett (14, 16) eine allgemein konvexe Fläche zum Aufstellen auf die Träger aufweist, und dass die demontierbaren Verbindungsmittel (50) für eine Verbindung des oder jedes Muldenbetts (14, 16) an mindestens zwei bezüglich des Gestells (12) gegenüberliegenden, vorbestimmten Positionen eingerichtet sind.

5. Bandförderer, der einen Tragrahmen-Satz (10), der entlang der Länge des Förderers verteilt ist, und ein bewegbares Band aufweist, das von den Tragrahmen getragen ist, **gekennzeichnet dadurch, dass** der Tragrahmen-Satz Rahmen (10) nach einem der vorherigen Ansprüche aufweist.

## Claims

1. Supporting frame (10) for a belt conveyor comprising a frame (12) and at least one cradle (14, 16) for guiding the belt resting on the said frame (12), the frame (12) comprising at least two more or less identical assembled structural parts (18A, 18B), each structural part (18A, 18B) being formed of a single component and in particular of a bent tube and being generally curved, and removable means (20) for assembling the said structural parts (18A, 18B), **characterised in that** each structural part (18A, 18B) has free ends between which two sections (22) are formed for support on the ground, extended by legs (24) connected to each other by a longitudinal beam (26) supporting the cradle or each cradle (14), and **in that** the said assembly removable means (20) are arranged at the free ends of the structural parts (18A, 18B) and have complementary fitting-in profiles (22, 32) made on the said structural parts (18A, 18B).

2. Supporting frame according to Claim 1, **characterised in that** the said removable assembly means (20) have in addition a key (34) for locking the complementary fitting-in profiles (22, 32).

3. Supporting frame according of any one of the above claims, **characterised in that** it has removable means (50) for connecting the guide cradle or each guide cradle (14, 16) to the structural part or each structural part (18A, 18B).

4. Supporting frame according to Claim 3, **characterised in that** the cradle or each cradle (14, 16) has a support surface on the said beams, generally convex, and **in that** the said removable connection means (50) are adapted for connection of the cradle or of each cradle (14, 16) in at least two distinct swinging positions in relation to the frame (12).

5. Belt conveyor having an assembly of supporting frames (10) distributed along the length of the belt and a moving belt supported by the supporting frames (10), **characterised in that** the said supporting frame assembly has frames (10) according to any one of the above claims.
